# EUROPÄISCHE PATENTSCHRIFT

(11) **EP 1 233 205 B1**
(45) Veröffentlichungstag und Bekanntmachung des Hinweises auf die Patenterteilung: **22.12.2004**
(21) Anmeldenummer: 02002321.4
(22) Anmeldetag: 31.01.2002
(51) Int. Cl.: F16F 9/58, F16F 1/12, B60G 11/16

(54) **Federungsanordnung**
Spring arrangement
Disposition de ressort

(30) Priorität: 15.02.2001 DE 10106915
(43) Veröffentlichungstag der Anmeldung: 21.08.2002
(73) Patentinhaber: Benteler Automobiltechnik GmbH, 33104 Paderborn (DE)
(72) Erfinder: Remmert, Heiner, 33100 Paderborn (DE); Rohde, Andreas, Dr., 38114 Braunschweig (DE)
(74) Vertreter: Ksoll, Peter, Dr.-Ing.

(56) Entgegenhaltungen:
- EP-A- 0 266 491
- EP-A- 0 281 173
- EP-A- 0 778 166
- EP-A- 0 963 866
- DE-A- 19 758 008
- DE-C- 19 614 246
- US-A- 2 817 510
- US-A- 5 467 970
- US-A- 6 149 171
- PATENT ABSTRACTS OF JAPAN Bd. 1998, Nr. 02, 30. Januar 1998 (1998-01-30) & JP 09 272317 A (SHINKO SEISAKUSHO:KK;MITSUBISHI MOTORS CORP), 21. Oktober 1997 (1997-10-21)
- PATENT ABSTRACTS OF JAPAN Bd. 1998, Nr. 01, 30. Januar 1998 (1998-01-30) & JP 09 226332 A (KINUGAWA RUBBER IND CO LTD), 2. September 1997 (1997-09-02)
- PATENT ABSTRACTS OF JAPAN Bd. 1999, Nr. 02, 26. Februar 1999 (1999-02-26) & JP 10 297234 A (KINUGAWA RUBBER IND CO LTD), 10. November 1998 (1998-11-10) -& JP 10 297234 A (KINUGAWA RUBBER IND CO LTD) 10. November 1998 (1998-11-10)
- PATENT ABSTRACTS OF JAPAN Bd. 0171, Nr. 51 (M-1387), 25. März 1993 (1993-03-25) & JP 4 321413 A (DAIHATSU MOTOR CO LTD), 11. November 1992 (1992-11-11)

## Beschreibung

Die Erfindung betrifft eine Federungsanordnung mit einer als Schraubendruckfeder ausgebildeten Tragfeder gemäß den Merkmalen im Oberbegriff des Anspruchs 1. Eine derartige Federungsanordnung ist aus Dokument EP-A-0 963 866 bekannt.

Die Federung in einem Fahrwerk eines Kraftfahrzeugs dient der elastischen Verbindung zwischen der Karosserie und den Radführungsteilen. Die Federung soll den Fahrzeugaufbau von höherfrequenten Radschwingungen isolieren, gleichzeitig aber der langwelligen Fahrbahnkontur nachführen. Im Stand der Technik sind unterschiedliche Federungskonzepte bekannt. Neben Blattfedern, die vorwiegend bei Lastkraftwagen zum Einsatz kommen, sind Drehstabfedern, Luftfedern sowie Silentblöcke bekannt. Sehr häufig kommen Schraubendruckfedern zum Einsatz, bei denen sich durch unterschiedliche Drahtdicken und verschiedene Formen eine progressive, degressive oder lineare Federkennung erzielen lässt. Als besonders raumsparend haben sich dabei Tonnenfedern erwiesen, bei der sich die Windungen beim Einfedern ineinander legen. Neben diesen als Tragfeder bezeichneten Schraubendruckfedern können Zusatzfedern zum Einsatz kommen, die als Zug- oder Druckanschlag in Parallelschaltung zu einer Tragfeder eine progressive Kennlinie ermöglichen. Übliche Werkstoffe für Zusatzfedern sind Gummi oder zellige Polyurethan-Elastomere. Die Zusatzfeder hat gegebenenfalls gleichzeitig auch die Funktion eines Anschlagpuffers, um ein unvermitteltes Aufblocksetzen einer Schraubendruckfeder zu vermeiden. In der Regel sind die Zusatzfedern außerhalb der Tragfeder angeordnet und in einem Aufnahmetopf gehalten.

Es ist weiterhin bekannt, zur Vermeidung von Abrieb und Geräuschen zwischen der Tragfeder und einem die Tragfeder lageorientierenden Federteller eine Federunterlage anzuordnen. Die Federunterlage ist in der Regel aus Gummi. Sie kann aber auch aus einem verzinkten oder oberflächenbeschichteten Blech bestehen, das zur Vermeidung von Korrosion der Tragfeder als Opferanode eingesetzt wird.

Wenn die in einem Aufnahmetopf gehaltene Zusatzfeder koaxial zur Tragfeder angeordnet werden soll, ergeben sich hinsichtlich der Montage gewisse Schwierigkeiten, da auf engem Raum drei verschiedene Bauteile platziert werden müssen. Erstens der Aufnahmetopf mit der Zusatzfeder, der an dem Federteller zu befestigen ist, zweitens die zwischen Federteller und Tragfeder anzuordnende Federunterlage und drittens die eigentliche Tragfeder. Während die Zusatzfeder mit dem Aufnahmetopf noch eine vormontierte Einheit bildet, sind die Tragfeder und die Federunterlage Einzelteile, die erst in der federbelasteten Einbausituation lageorientiert sind. In der Montage ist die Handhabung der Einzelteile nicht optimal, zumal ihr Gewicht nicht unerheblich ist.

Der Erfindung liegt ausgehend vom Stand der Technik die Aufgabe zugrunde, eine Federungsanordnung zu schaffen, die einerseits in der Montage einfach handhabbar ist und bei welcher andererseits leichtere Werkstoffe zum Einsatz kommen können.

Die Erfindung löst die Aufgabe mit den im kennzeichnenden Teil des Anspruchs 1 angegebenen Merkmalen.

Ein Merkmal der Erfindung bildet der Sachverhalt, dass der die Federunterlage durchsetzende Aufnahmetopf und Anschlagsockel einen sich radial nach außen erstreckenden Stützring besitzt. Der Stützring hintergreift die Federunterlage auf der der Tragfeder abgewandten Seite, wodurch der Aufnahmetopf mit der Zusatzfeder und die Federunterlage bzw. der Anschlagsockel und die Federunterlage eine vormontierbare Einheit bilden. Der Vorteil ist, dass bei der Endmontage weniger einzelne Bauteile zu händeln sind, was die Montage deutlich erleichtert. Selbstverständlich ist es von Vorteil, daß sowohl der Aufnahmetopf als auch der Anschlagsockel mit einem Stützring versehen sind.

Radführungsteile, wie z.B. Fahrzeugachsen, können mehrere Freiheitsgrade besitzen. Es ist daher nicht in jedem Fall gewährleistet, dass beim Auftreffen der Zusatzfeder auf die Anschlagfläche des Anschlagsockels deren Mittellängsachsen deckungsgleich sind, d.h. dass die Stirnflächen der Zusatzfeder und des Anschlagsockels parallel zueinander zur Anlage gelangen. Diesem Umstand tragen die Merkmale Rechnung, wonach der Anschlagsockel eine der Zusatzfeder zugewandte Anschlagfläche aufweist, deren Flächennormale von der Mittellängsachse der Tragfeder abweicht. Im entspannten Zustand der Tragfeder ist deren Mittellängsachse deckungsgleich mit der Zusatzfeder. Federt die Federungsanordnung nun schräg ein, ist in Abhängigkeit von dem jeweiligen Fahrzeugtyp und den konstruktiven Rahmenbedingungen die Flächennormale der Anschlagfläche so orientiert, dass diese bei Auftreffen der Zusatzfeder im wesentlichen mit der Mittellängsachse der Tragfeder deckungsgleich ist. Dadurch wirken in der Zusatzfeder fast ausschließlich Normalkräfte. Biegekräfte, die die Federkennung der Zusatzfeder beeinflussen können, werden eliminiert. Dies wiederum erhöht die Lebensdauer der Zusatzfeder und ermöglicht eine bessere Abstimmung der gesamten Federungsanordnung.

Die Vorteile der erfindungsgemäßen Federungsanordnung kommen insbesondere dann zum Tragen, wenn es sich bei der Tragfeder um eine Tonnenfeder mit einem sich endseitig verringernden Windungsdurchmesser handelt. Hierbei braucht der Außendurchmesser des Stützrings nur geringfügig größer zu sein als der Windungsdurchmesser der endseitigen Windung, um ein sicheres Einklemmen der Federunterlage zwischen der Tragfeder und dem Stützring zu gewährleisten. Bei Stützringen mit geringem Außendurchmesser wird zusätzlich Material und damit Gewicht eingespart, was letztlich zur Verringerung des Kraftstoffverbrauchs beiträgt.

Nach den Merkmalen der Ansprüche 2 und 3 besitzt die Federunterlage einen an dem Aufnahmetopf bzw. dem Anschlagsockel radial außen anliegenden und zur Tragfeder weisenden Kragen, der zusammen mit dem Anschlagsockel bzw. der Tragfeder das jeweilige Ende der Tragfeder in radialer Richtung lageorientiert. Der Aufnahmetopf hat somit mehrfache Funktionen. Zunächst stützt sich die Tragfeder mittelbar über die Federunterlage gegen den Stützring des Aufnahmetopfs ab, wobei der Aufnahmetopf gleichzeitig das eine Ende der Tragfeder in radialer Richtung lageorientiert. Zentrale Führungsdorne oder dergleichen, wie sie bei Tonnenfedern zum Einsatz kommen, sind bei dieser Anordnung nicht erforderlich. Der zur Tragfeder weisende Kragen hat die Funktion, Abrieb und Geräuschentwicklung zwischen der Tragfeder und dem Aufnahmetopf zu vermeiden. Die Höhe des Kragens entspricht zweckmäßigerweise mindestens dem Drahtdurchmesser der endseitigen Windung. Die gleiche Funktionalität wie der Aufnahmetopf besitzt auch der Anschlagsockel in Zusammenwirkung mit der zweiten Federunterlage. Der Anschlagsockel dient ebenfalls zur Lageorientierung der Tragfeder.

Besonders zweckmäßig ist es, wenn nicht nur die Federunterlagen und die Zusatzfeder eine vormontierbare Einheit bilden, sondern diese beiden Bauteile im wesentlichen unverlierbar mit der Tragfeder gekoppelt sind. Nach den Merkmalen des Anspruchs 4 wird dies dadurch erreicht, dass der Kragen eine radial nach innen gerichtete Hinterschneidung aufweist, in die eine endseitige Windung der Tragfeder eingreift. Durch die Federkraft der Tragfeder schnappt die endseitige Windung kraftschlüssig in die Hinterschneidung ein. Dadurch ist der Kragen und damit die gesamte Federunterlage radial außenseitig gegen den Aufnahmetopf gepresst, so dass diese Komponenten im Ganzen montiert werden können. Die Hinterschneidung kann so positioniert sein, dass die Federunterlage von der Tragfeder zusätzlich in axialer Richtung gegen den Stützring des Aufnahmetopfes gepresst ist.

Soweit die Federunterlage aus Gummi oder einem sehr nachgiebigen Elastomer besteht, bei welchem eine Hinterschneidung des Kragens selbst nicht ausreichend sein sollte, um Tragfedem hohen Gewichts ausreichend zu fixieren, kann der Aufnahmetopf und/oder der Anschlagsockel im Bereich des Kragens auf seinem Außenumfang eine Einprägung besitzen (Anspruch 5). Bei der Vormontage der Tragfeder mit dem Aufnahmetopf bzw. des Anschlagsockels kann die letzte Windung der Tragfeder somit den Kragen in die als Hinterschneidung fungierende Einprägung pressen.

Grundsätzlich ist es selbstverständlich auch möglich, die der Anschlagfläche zugewandte Stirnfläche der Zusatzfeder mit einer entsprechenden Schrägung zu versehen, um ein möglichst paralleles Aufeinandertreffen der Zusatzfeder und der Anschlagfläche zu gewährleisten.

Zusätzlich kann die Anschlagfläche des Anschlagsockels konkav gekrümmt sein (Anspruch 6), was insbesondere bei Zusatzfedern aus Gummi oder Polyurethan-Elastomeren von Vorteil ist, da hierdurch eine ergänzende Zentrierung auf die Flächennormale der Anschlagfläche erreicht wird.

Gegenüber den bisher in der Regel aus Stahlwerkstoffen bestehenden Anschlagsockeln ist erfindungsgemäß vorgesehen, dass der Aufnahmetopf und/oder der Anschlagsockel aus Kunststoff gefertigt sein können (Anspruch 7), wodurch eine deutliche Gewichtseinsparung möglich ist.

Im Rahmen der Ausführungsform des Anspruchs 8 weist der Anschlagsockel einen in eine Öffnung der Karosserie oder des Radführungsteils eingreifenden Fixierzapfen auf. Ein solcher Fixierzapfen greift zweckmäßigerweise möglichst spielfrei in die Öffnung, um eine einwandfreie Führung des Anschlagsockels und damit der Tragfeder zu gewährleisten.

Der Anschlagsockel soll nach den Merkmalen des Anspruchs 9 wenigstens einen Klemmsteg auf seinem Außenumfang aufweisen, damit er fest in der Öffnung gehalten ist. Insbesondere bei Fertigung des Anschlagsockels aus einem gegenüber dem Radführungsteil bzw. der Karosserie weicheren Material, wie beispielsweise Kunststoff, können sich die Klemmstege beim Einfügen in die Öffnung abreiben und einen strammen Sitz des Fixierzapfens und damit des Anschlagsockels in der Öffnung gewährleisten.

In Ergänzung zu den Klemmstegen vor allem aber alternativ kann der Fixierzapfen gemäß den Merkmalen des Anspruchs 10 mehrere federnde Klemmhaken mit radial nach außen gerichteter Nase besitzen, welche die Kanten der Öffnung hintergreifen. Die Nasen besitzen vorzugsweise eine Schrägfläche, über welche die Klemmhaken bei der Montage in die Öffnung gleiten. In der Einrastposition schnappen die unter Federkraft stehenden Klemmhaken hinter die der Tragfeder abgewandten Kanten der Öffnung, wodurch der Anschlagsockel an der Karosserie oder dem Radführungsteil festgeklippt ist.

Wenn die Öffnung einen kreisrunden Querschnitt besitzt, muss für die korrekte Montage des Anschlagsockels eine Möglichkeit gegeben sein, dessen Anschlagfläche entsprechend der Einbausituation auszurichten. Daher ist nach Anspruch 11 vorgesehen, den Anschlagsockel verdrehsicher zu lagern. In vorteilhafter Ausgestaltung dieses Aspekts des Erfindungsgedankens kann der Fixierzapfen auf seinem Außenumfang einen Ausrichtungssteg aufweisen, der in eine korrespondierende randseitige Ausnehmung der Öffnung eingreift. Selbstverständlich ist auch der umgekehrte Fall denkbar, d.h. dass am Außenumfang des Fixierzapfens eine Aussparung vorgesehen ist, die mit einem entsprechenden Vorsprung am Rand der Öffnung korrespondiert. Im Rahmen der Erfindung sind auch Verdrehsicherungen denkbar, die durch eine bestimmte Form der Öffnung bestimmt sind, d.h. Öffnungen, in denen nur eine Positionierung des Anschlagsockels möglich ist.

Weiterhin sind auch Verdrehsicherungen außerhalb der Öffnung möglich, beispielsweise ein an dem Stützring angeordneter Stift, der in eine zusätzliche Bohrung am Radführungsteil oder der Karosserie eingreift.

Zum Zwecke der Gewichtsersparnis wird als vorteilhaft angesehen, den Anschlagsockel als Spritzgussteil aus Kunststoff herzustellen, wobei der Fixierzapfen als Hohlzapfen ausgeführt sein kann. Zur weiteren Gewichtsersparnis kann der Durchmesser des Fixierzapfens von dem Außendurchmesser des Anschlagsockels abweichen, wobei die Durchmesserdifferenz über eine Vielzahl von Versteifungsrippen überbrückt wird. Eine zusätzliche Gewichtseinsparung lässt sich auch durch eine Ausnehmung auf der der tragfederabgewandten Seite des Aufnahmetopfes erreichen.

Gewicht lässt sich auch durch eine Federunterlage einsparen, die auf ihrer der Tragfeder abgewandten Seite bereichsweise eine Gitterstruktur aufweist (Anspruch 12). Durch die variierende Ausgestaltung der Gitterstruktur lässt sich die Federkennung der Federungsanordnung zusätzlich beeinflussen. Mögliche Parameter sind die Anzahl, Anordnung und geometrische Ausgestaltung der Vertiefungen innerhalb der Gitterstruktur sowie das gewählte Material.

Durch eine Gestaltung der Federungsanordnung nach den Merkmalen des Anspruchs 13 liegen die der Tragfeder abgewandte Seite der Federunterlage und die der Tragfeder abgewandte Seite des Stützrings in einer Ebene.

Dementsprechend besitzt die Federunterlage eine dem Stützring Raum bietende Aussparung, wobei sich die zuvor beschriebene Gitterstruktur zweckmäßig von der Außenkante des Stützrings bis zur Außenkante der Federunterlage erstreckt.

Die Merkmale der Erfindung kommen insbesondere dann vorteilhaft zum Tragen, wenn die Tragfeder einen sich endseitig verringernden Windungsdurchmesser besitzt, also als Tonnenfeder ausgeführt ist (Anspruch 14).

Nach Anspruch 15 besitzt die Tragfeder einen inkonsistenten Drahtdurchmesser. Vorzugsweise nimmt der Drahtdurchmesser zu den Enden hin ab. Neben der Variierung des Windungsdurchmessers und des Drahtdurchmessers kann die Federkennlinie der Federungsanordnung auch durch die Konfiguration der Zusatzfeder beeinflusst werden. Eine Zusatzfeder aus Vollmaterial, insbesondere aus Gummi oder einem Polyurethan-Elastomer bringt eher eine steile Federkennlinie mit sich, wobei sich die Federkennlinie durch eine materialsparende Bauweise, insbesondere durch eine im wesentlichen zylindrische Hohlfeder flacher einstellen lässt. Die Zusatzfeder kann im Querschnitt sowohl tonnenartig oder zylindrisch ausgebildet sein, als auch eine kegelige Form besitzen, wobei sich die konkrete Ausgestaltung an den gewünschten Federungseigenschaften orientiert. Hierbei spielt auch die Höhe und der Durchmesser des Aufnahmetopfes bzw. das Verhältnis der beiden Parameter eine Rolle.

Der Aufnahmetopf kann eine oder mehrere umfangsseitige Verstärkungsrillen aufweisen und besitzt vorzugsweise mündungsseitig einen nach außen weisenden Rand, der Beschädigungen der vorzugsweise aus einem Elastomer bestehenden Zusatzfeder bei schrägem Einfedern verhindert.

Die Erfindung ist nachfolgend anhand von in schematisch dargestellten Ausführungsbeispielen näher erläutert. Es zeigen:
- Figur 1: die erfindungsgemäße Federungsanordnung im Längsschnitt;
- Figur 2: die in Figur 1 dargestellte Federungsanordnung in perspektivischer Darstellung ohne angrenzende Bauteile;
- Figur 3: eine perspektivische Darstellung einer Ausführung eines Aufnahmetopfes aus Stahl oder Aluminiumwerkstoffen zusammen mit einer Federunterlage;
- Figur 4: in perspektivischer Darstellung einen Aufnahmetopf aus Kunststoff mit Federunterlage;
- Figur 5: in perspektivischer Darstellung einen in ein Radführungsteil eingesteckten Anschlagsockel aus Kunststoff mit Klemmhaken und
- Figur 6: ebenfalls in perspektivischer Darstellung einen Anschlagsockel mit einem Fixierzapfen mit außenseitigen Klemmstegen und einem Ausrichtungssteg.

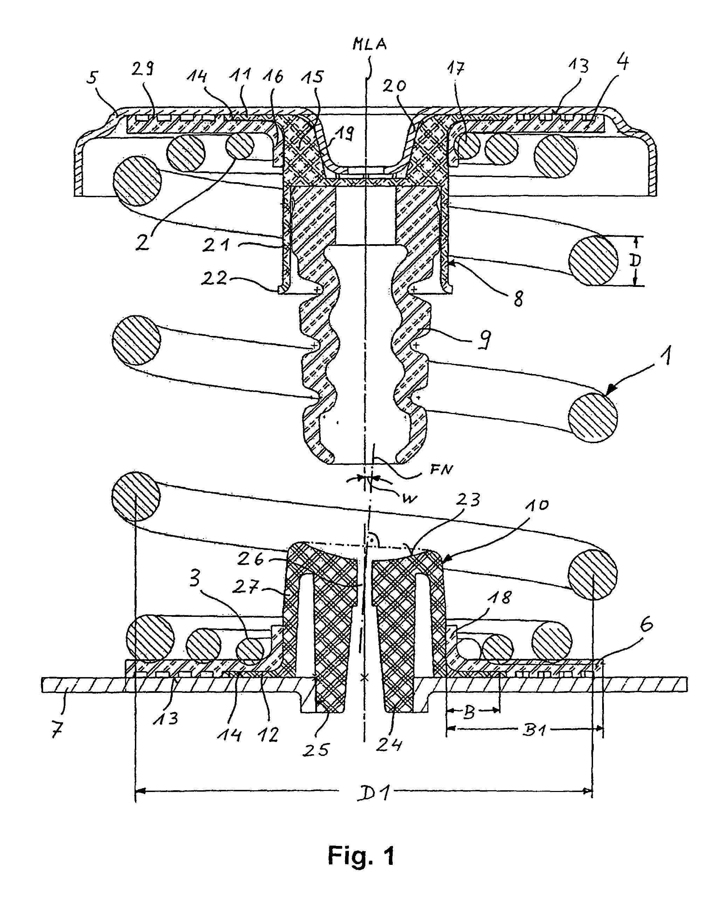

Figur 1 zeigt eine Federungsanordnung mit einer als Schraubendruckfeder ausgebildeten Tragfeder 1 mit inkonsistentem Drahtdurchmesser D und sich zu ihren Enden 2, 3 verringerndem Windungsdurchmesser D1. In der dargestellten Form ist die Tragfeder 1 teilweise eingefedert, wobei sich ihre endseitigen Windungen spiralförmig ineinanderlegen.

Das in der Zeichenebene obere Ende 2 der Tragfeder 1 stützt sich mittelbar über eine ringscheibenförmige Federunterlage 4 an einem Federteller 5 ab, der zu einer nicht näher dargestellten Karosserie eines Kraftfahrzeugs gehört. Das andere Ende 3 der Tragfeder 1 greift mittelbar über eine Federunterlage 6 an einem nur ausschnittsweise dargestellten Radführungsteil 7 mittelbar an. Koaxial zur Mittellängsachse MLA der Tragfeder 1 ist an dem Ende 2 der Tragfeder 1 eine in einem Aufnahmetopf 8 gehaltene Zusatzfeder 9 platziert. Ein ebenfalls koaxial zur Mittellängsachse MLA der Tragfeder 1 ausgerichteter Anschlagsockel 10 befindet sich am anderen Ende 3 der Tragfeder 1.

Sowohl der Aufnahmetopf 8 als auch der Anschlagsockel 10 durchsetzen die zugeordneten Federunterlagen 4, 6 und hintergreifen diese durch einen sich jeweils radial nach außen erstreckenden Stützring 11, 12, wobei die Breite B der Stützringe 11, 12 kleiner ist als die Hälfte der Breite B1 der ringscheibenförmigen Federunterlagen 4, 6. Die der Tragfeder 1 abgewandten Seiten 13 der Federunterlagen 4, 6 besitzen entsprechende ringförmige Aussparungen 14 zur Aufnahme der Stützringe 11, 12, so dass diese und die der Tragfeder abgewandte Seite 13 der Federunterlagen 4, 6 parallel an dem Federteller 5 bzw. dem Radführungsteil 7 anliegen.

Die eine Federunterlage 4 ist zentrisch von einem Schaftabschnitt 15 des Aufnahmetopfes 8 durchsetzt, wobei die Federunterlage 4 einen radial an dem Schaftabschnitt 15 des Aufnahmetopfes 8 anliegenden und zur Tragfeder 1 weisenden Kragen 16 besitzt. Der Kragen 16 ist wenigstens so hoch wie die letzte Windung 17 der Tragfeder 1 dick ist. In gleicher Weise durchsetzt der Anschlagsockel 10 die andere Federunterlage 6, die ebenfalls einen entsprechend konfigurierten Kragen 18 besitzt.

Wie im rechten oberen Bildviertel zu erkennen ist, liegt die Windung 17 so eng an dem Kragen 16 an, dass dieser zusammengepresst und gegen den Schaftabschnitt 15 des Aufnahmetopfes 8 gedrückt ist. Hier nicht näher dargestellt kann der nachgiebige Kragen 16 eine radial nach innen gerichtete Hinterschneidung besitzen, in die die endseitige Windung 17 der Tragfeder 1 eingreift. Durch die Klemmwirkung der endseitigen Windung 17 bilden die Tragfeder 1 und der Aufnahmetopf 8 mit der Zusatzfeder 9 und der Federunterlage 4 eine vormontierte Einheit, die als Ganzes an dem Federteller 5 der Karosserie befestigt werden kann.

Aus Gründen der Gewichtsersparnis ist der Aufnahmetopf 8 im Bereich des Schaftabschnitts 15 auf seiner der Zusatzfeder 9 abgewandten Seite mit einer Aussparung 19 ausgestattet, in die bei diesem Ausführungsbeispiel ein Zentrierdom 20 des Federtellers 5 eingreift.

Die Zusatzfeder 9 ist in einem sich an den Schaftabschnitt 15 des Aufnahmetopfs 8 anschließenden becherförmigen Halteabschnitt 21 innen liegend fixiert, wobei der Halteabschnitt 21 mündungsseitig eine nach außen weisende Kante 22 hat. Die Zusatzfeder 9 besteht aus Gummi oder einem Polyurethan-Elastomer und ist im wesentlichen zylinderförmig konfiguriert mit im Abstand zueinander angeordneten äußeren Ringkerben. Grundsätzlich kann die Zusatzfeder 9 auch aus anderen Werkstoffen bestehen.

Die Zusatzfeder 9 soll beim Einfedern der Tragfeder 1 möglichst senkrecht auf eine Anschlagfläche 23 des Anschlagsockels 10 treffen. Bei dem hier dargestellten Ausführungsbeispiel ist die Anschlagfläche 23 konkav gekrümmt, wobei ihre mittige Flächennormale FN im Winkel W zur Mittellängsachse MLA der Tragfeder 1 im entspannten bzw. wie in Figur 1 dargestellt, vorgespannten Zustand steht. Der Winkel W zwischen der Mittellängsachse MLA der Tragfeder 1 und der Flächennormale FN bestimmt sich nach der jeweiligen Einbausituation und der Kinematik der Achse im Kraftfahrzeug und ermöglicht bei schrägem Einfedern der Federungsanordnung ein möglichst senkrechtes Auftreffen der Zusatzfeder 9 auf den Anschlagsockel 10.

Der Anschlagsockel 10 besitzt auf seiner der Anschlagfläche 23 abgewandten Seite einen Fixierzapfen 24, der in eine Öffnung 25 im Radführungsteil 7 eingreift und so den Anschlagsockel 10 lageorientiert. Der Fixierzapfen 24 ist in Richtung der Mittelängsachse MLA der Tragfeder 1 längskanalisiert, wobei der zentrale Längskanal 26 des Fixierzapfens 24 in die Anschlagfläche 23 mündet. Der Fixierzapfen 24 ist in radialem Abstand konzentrisch zu einem im wesentlichen zylindrischen Mantelabschnitt 27 angeordnet, wobei der Mantelabschnitt 27 an einem Ende den Stützring 12 trägt und an dem anderen Ende von der Anschlagfläche 23 begrenzt ist.

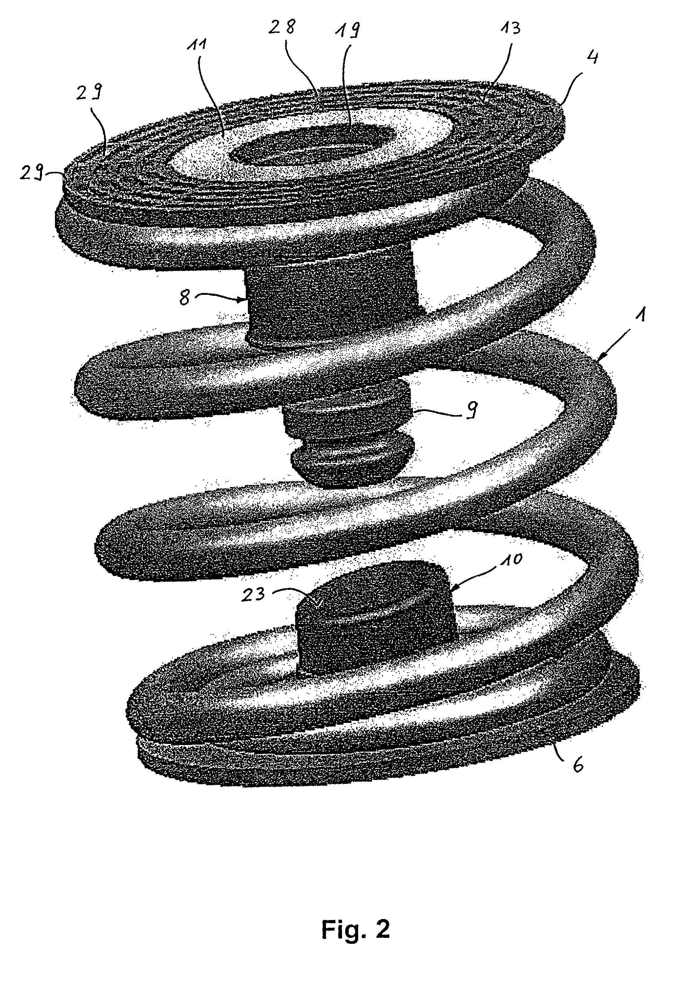

Figur 2 zeigt die in Figur 1 dargestellte Federungsanordnung in perspektivischer Darstellung ohne den in Figur 1 dargestellten Federteller 5 und das Radführungsteil 7. In dieser rückwärtigen Ansicht auf die der Tragfeder 1 abgewandten Seite 13 der Federunterlage 4 ist ihre gitterartige Konfiguration zu erkennen mit gleichmäßig beabstandeten Radialstegen 28 und konzentrischen Ringen 29. Die Beabstandung der Radialstege 28 und der Ringe 29 bestimmt die Federkennung der Federunterlage 4 sowie die mögliche Gewichtsersparnis dieses Bauteils. Die Federunterlage 6 an dem Anschlagsockel 10 besitzt ebenfalls eine Gitterstruktur, wie die Querschnittsdarstellung der Figur 1 zeigt.

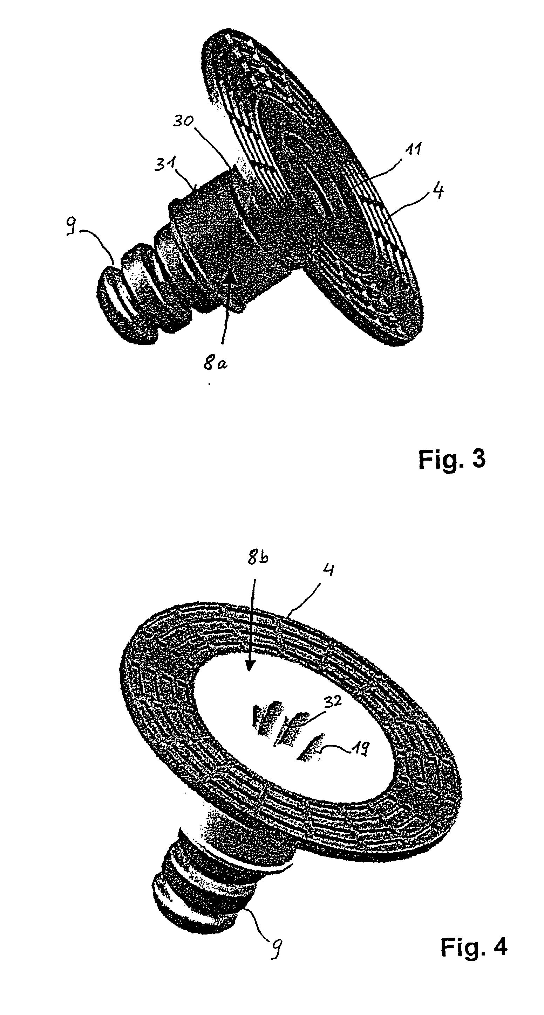

Die Figuren 3 und 4 zeigen zwei mögliche Ausführungsformen eines Aufnahmetopfes mit Federunterlage 4, wobei der in Figur 3 dargestellte Aufnahmetopf 8a aus Stahl bzw. einer Aluminiumlegierung besteht mit einer zusätzlichen nach innen gerichteten Einprägung 30 auf seinem Außenumfang 31, die als Aussteifung des Aufnahmetopfes 8a dient.

In der Ausführungsform gemäß Figur 4 besteht der Aufnahmetopf 8b aus Kunststoff und unterscheidet sich insofern von der Ausführung des Aufnahmetopfes 8a aus Stahl bzw. Aluminiumwerkstoffen, dass im Bereich der Aussparung 19 auf der der Tragfeder 1 abgewandten Seite radial nach innen weisende Versteifungsrippen 32 angebracht sind.

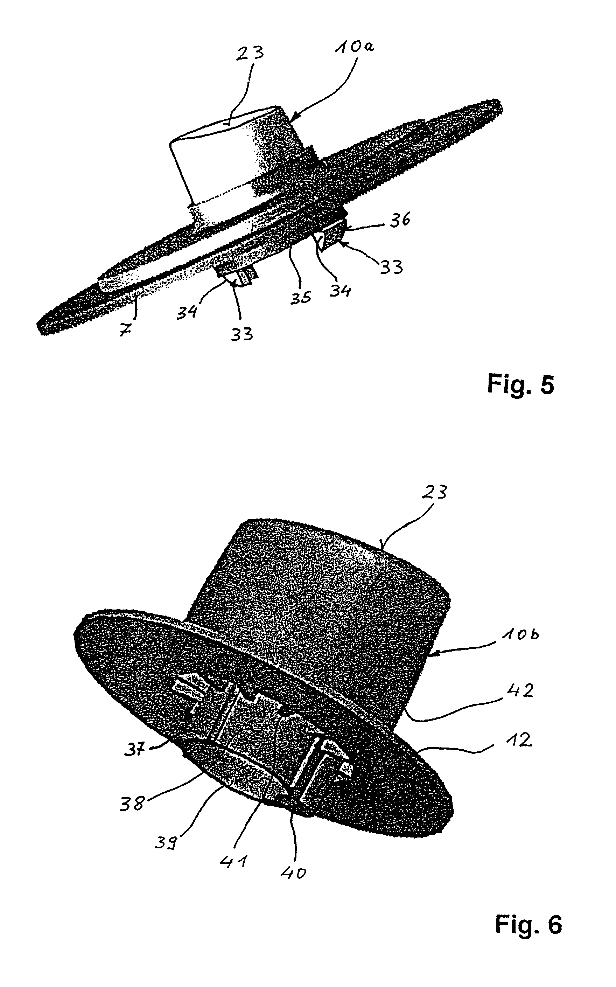

Der in Figur 5 dargestellte Anschlagsockel 10a ist mit einem Klippmechanismus in der Öffnung 25 des Radführungsteils 7 gehalten. Hierzu sind an dem nicht weiter sichtbaren Fixierzapfen mehrere auf seinem Umfang verteilte federnde Klemmhaken 33 platziert mit radial nach außen gerichteten Nasen 34, die hinter die Kanten 35 der Öffnung 25 schnappen. Die Nasen 34 besitzen jeweils eine schräg nach außen gerichtete Schrägfläche 36, die das Einführen des Anschlagsockels 10 in die Öffnung 25 erleichtert.

Eine weitere Möglichkeit zur Befestigung eines Anschlagsockels 10b ist in Figur 6 dargestellt. Hierbei sind bei dem aus Kunststoff hergestellten Anschlagsockel 10b axial verlaufende Klemmstege 37 auf dem Außenumfang 38 eines Fixierzapfens 39 platziert. Die Höhe der Klemmstege 37 ist so bemessen, dass sich diese beim Einstecken des Anschlagsockels 10b in eine Öffnung in gewissem Umfange abreiben und eine Klemmung des Fixierzapfens 39 in der Öffnung sicherstellen. In Ergänzung zu den Klemmstegen 37 besitzt der Fixierzapfen 39 einen sich ebenfalls axial erstreckenden Ausrichtungssteg 40, mit dem die Winkellage des Anschlagsockels 10b in der Öffnung festgelegt werden kann. Der Ausrichtungssteg 40 ist in diesem Ausführungsbeispiel zapfenförmig mit rundem Querschnitt ausgebildet und greift in der Einbausituation in eine entsprechend konfigurierte Ausnehmung in der Öffnung. Aus der Figur 6 werden weiterhin radial ausgerichtete Versteifungsrippen 41 deutlich, die zur Aussteifung des Anschlagsockels 10b dienen. Die Versteifungsrippen 41 erstrecken sich im Höhenbereich des Mantelabschnitts 42 von diesem ausgehend in Richtung auf den Fixierzapfen 39.

### Bezugszeichenaufstellung:

- 1 -: Tragfeder
- 2 -: Ende von 1
- 3 -: Ende von 2
- 4 -: Federunterlage
- 5 -: Federteller
- 6 -: Federunterlage
- 7 -: Radführungsteil
- 8 -: Aufnahmetopf
8a - Aufnahmetopf
8b - Aufnahmetopf
- 9 -: Zusatzfeder
- 10 -: Anschlagsockel
10a - Anschlagsockel
10b - Anschlagsockel
- 11 -: Stützring von 8, 8a, 8b
- 12 -: Stützring von 10, 10a, 10b
- 13 -: Seite von 4, 5
- 14 -: Aussparung in 13
- 15 -: Schaftabschnitt
- 16 -: Kragen von 4
- 17 -: endseitige Windung von 1
- 18 -: Kragen von 6
- 19 -: Aussparung von 15
- 20 -: Zentrierdom an 5
- 21 -: Halteabschnitt von 8
- 22 -: Kante von 21
- 23 -: Anschlagfläche
- 24 -: Fixierzapfen von 10
- 25 -: Öffnung in 7
- 26 -: Längskanal in 24
- 27 -: Mantelabschnitt
- 28 -: Radialsteg von 4
- 29 -: Ring von 4
- 30 -: Einprägung in 31
- 31 -: Außenumfang von 8a
- 32 -: Versteifungsrippen von 19
- 33 -: Klemmhaken von 10a
- 34 -: Nase von 33
- 35 -: Kanten von 25
- 36 -: Schrägfläche an 34
- 37 -: Klemmsteg an 39
- 38 -: Außenumfang von 39
- 39 -: Fixierzapfen
- 40 -: Ausrichtungssteg
- 41 -: Versteifungsrippen
- 42 -: Mantelabschnitt von 10b

- B -: Breite von 11, 12
- B1 -: Breite von 4, 6
- D -: Drahtdurchmesser von 1
- D1 -: Windungsdurchmesser von 1
- FN -: Flächennormale von 23
- MLA -: Mittellängsachse von 1
- W -: Winkel zwischen FN und MLA

## Patentansprüche

1. Federungsanordnung mit einer als Schraubendruckfeder ausgebildeten Tragfeder (1), deren Enden (2, 3) über scheibenartige Federunterlagen (4, 6) einerseits an einer Karosserie (5) und andererseits an einem Radführungsteil (7) eines Kraftfahrzeugs mittelbar abgestützt sind, wobei einem Ende (2) der Tragfeder (1) eine koaxial zur Tragfeder (1) angeordnete, in einem Aufnahmetopf (8, 8a, 8b) gehaltene Zusatzfeder (9) zugeordnet ist, die an einer Anschlagfläche (23) eines dem zweiten Ende (3) der Tragfeder (1) zugeordneten Anschlagsockels (10, 10a, 10b) zur Anlage bringbar ist, **dadurch gekennzeichnet, dass** der Aufnahmetopf (8, 8a, 8b) und der Anschlagsockel (10, 10a, 10b) einen sich radial nach außen erstreckenden Stützring (11, 12) besitzen, der die jeweilige Federunterlage (4, 6) auf ihrer der Tragfeder (1) abgewandten Seite (13) zumindest teilweise hintergreift, wobei der Anschlagsockel (10, 10a, 10b) eine der Zusatzfeder (9) zugewandte Anschlagfläche (23) aufweist, deren Flächennormale (FN) von der Mittellängsachse (MLA) der Tragfeder (1) abweicht, so dass die Flächennormale (FN) bei schrägem Einfedern der Federungsanordnung beim Auftreffen der Zusatzfeder (9) auf den Anschlagsockel (10, 10a, 10b) im wesentlichen mit der Mittellängsachse (MLA) der Tragfeder (1) deckungsgleich ist.

2. Federungsanordnung nach Anspruch 1, **dadurch gekennzeichnet, dass** eine der Federunterlagen (4) einen an dem Aufnahmetopf (8, 8a, 8b) radial außen anliegenden und zur Tragfeder (1) weisenden Kragen (16) besitzt, der zusammen mit dem Aufnahmetopf (8, 8a, 8b) das eine Ende (2) der Tragfeder (1) in radialer Richtung lageorientiert.

3. Federungsanordnung nach Anspruch 1 oder 2, **dadurch gekennzeichnet, dass** eine der Federunterlagen (6) einen an dem Anschlagsockel (10, 10a, 10b) radial außen anliegenden und zur Tragfeder (1) weisenden Kragen (18) besitzt, der zusammen mit dem Anschlagsockel (10, 10a, 10b) das andere Ende (3) der Tragfeder (1) in radialer Richtung lageorientiert.

4. Federungsanordnung nach einem der Ansprüche 2 oder 3, **dadurch gekennzeichnet, dass** der Kragen (16, 18) eine radiale nach innen gerichtete Hinterschneidung aufweist, in die eine endseitige Windung (17) der Tragfeder (1) eingreift.

5. Federungsanordnung nach einem der Ansprüche 2 bis 4, **dadurch gekennzeichnet, dass** der Aufnahmetopf (8) und/oder der Anschlagsockel (10, 10a ,10b) im Bereich des Kragens (16, 18) auf seinem Außenumfang eine Einprägung besitzt.

6. Federungsanordnung nach einem der Ansprüche 1 bis 5, **dadurch gekennzeichnet, dass** die Anschlagfläche (23) konkav gekrümmt ist.

7. Federungsanordnung nach einem der Ansprüche 1 bis 6, **dadurch gekennzeichnet, dass** der Aufnahmetopf (8, 8b) und/oder der Anschlagsockel (10, 10b) aus Kunststoff ist.

8. Federungsanordnung nach einem der Ansprüche 1 bis 7, **dadurch gekennzeichnet, dass** der Anschlagsockel (10, 10a, 10b) einen in eine Öffnung (25) der Karosserie (5) oder des Radführungsteils (7) eingreifenden Fixierzapfen (24, 39) aufweist.

9. Federungsanordnung nach Anspruch 8, **dadurch gekennzeichnet, dass** der Fixierzapfen (39) auf seinem Außenumfang (38) wenigstens einen Klemmsteg (37) aufweist.

10. Federungsanordnung nach Anspruch 8 oder 9, **dadurch gekennzeichnet, dass** der Fixierzapfen (24) mehrere federnde Klemmhaken (33) mit radial nach außen gerichteter Nase (34) besitzt, welche die Kanten (35) der Öffnung (25) hintergreifen.

11. Federungsanordnung nach einem der Ansprüche 1 bis 10, **dadurch gekennzeichnet, dass** der Anschlagsockel (10, 10a, 10b) verdrehgesichert gelagert ist.

12. Federungsanordnung nach einem der Ansprüche 1 bis 11, **dadurch gekennzeichnet, dass** mindestens eine der Federunterlagen (4, 6) auf ihrer der Tragfeder (1) abgewandten Seite (13) bereichsweise eine Gitterstruktur aufweist.

13. Federungsanordnung nach einem der Ansprüche 1 bis 12, **dadurch gekennzeichnet, dass** die der Tragfeder (1) abgewandte Seite (13) mindestens einer der Federunterlagen (4, 6) und die des Stützrings (11, 12) in einer Ebene liegen.

14. Federungsanordnung nach einem der Ansprüche 1 bis 13, **dadurch gekennzeichnet, dass** die Tragfeder (1) einen sich endseitig verringernden Windungsdurchmesser (D1) besitzt.

15. Federungsanordnung nach einem der Ansprüche 1 bis 14, **dadurch gekennzeichnet, dass** die Tragfeder (1) einen über ihre Länge inkonsistenten Drahtdurchmesser (D) besitzt.

## Claims

1. A suspension arrangement with a support spring (1) which is constructed as a helical compression spring and the ends (2, 3) of which are indirectly supported via discoid spring pads (4, 6) against a vehicle body (5) on the one hand and against a wheel guide part (7) of a motor vehicle, on the other hand, there being associated with one end (2) of the support spring (1) a supplementary spring (9) which is disposed coaxially to the support spring (1) and is held in a receiving cup (8, 8a, 8b) and which can be brought into contact against an abutment surface (23) of an abutment plinth (10, 10a, 10b) associated with the second end (3) of the support spring, **characterised in that** the receiving cup (8, 8a, 8b) and the abutment plinth (10, 10a, 10b) have a radially outwardly extending support ring (11, 12) which at least partially engages behind the respective spring pad (4, 6) on its side (13) remote from the support spring (1), the abutment plinth (10, 10a, 10b) having an abutment surface (23) which faces the supplementary spring (9) and the surface normal (FN) of which deviates from the central longitudinal axis (MLA) of the support spring (1) so that the surface normal (FN) in the case of oblique inward deflection of the suspension arrangement when the supplementary spring (9) meets the abutment plinth (10, 10a, 10b) is substantially coincident with the central longitudinal axis (MLA) of the support spring (1).

2. A suspension arrangement according to claim 1, **characterised in that** one of the spring pads (4) has a collar (16) radially outwardly adjoining the receiving cup (8, 8a, 8b) and pointing towards the support spring (1), said collar together with the receiving cup (8, 8a, 8b) positionally orienting one end (2) of the support spring (1) in the radial direction.

3. A suspension arrangement according to claim 1 or 2, **characterised in that** one of the spring pads (6) has a collar (18) radially outwardly adjoining the abutment plinth (10, 10a, 10b) and pointing towards the support spring (1), said collar (18) together with the abutment plinth (10, 10a, 10b) positionally orienting the other end (3) of the support spring (1) in the radial direction.

4. A suspension arrangement according to claim 2 or 3, **characterised in that** the collar (16, 18) has a radially inwardly directed undercut into which engages an end turn (17) of the support spring (1).

5. A suspension arrangement according to any one of claims 2 to 4, **characterised in that** the receiving cup (8) and/or the abutment plinth (10, 10a, 10b) has an embossing on its outer periphery in the region of the collar (16, 18).

6. A suspension arrangement according to any one of claims 1 to 5, **characterised in that** the abutment surface (23) is concavely curved.

7. A suspension arrangement according to any one of claims 1 to 6, **characterised in that** the receiving cup (8, 8b) and/or the abutment plinth (10, 10b) is of plastic.

8. A suspension arrangement according to any one of claims 1 to 7, **characterised in that** the abutment plinth (10, 10a, 10b) has a fixing pin (24, 39) engaging in an opening (25) in the vehicle body (5) or the wheel guide part (7).

9. A suspension arrangement according to claim 8, **characterised in that** the fixing pin (39) has at least one clamping web (37) on its outer periphery (38).

10. A suspension arrangement according to claim 8 or 9, **characterised in that** the fixing pin (24) has a plurality of resilient clamping hooks (33) with a radially outwardly directed nose (34), such hooks engaging behind the edges (35) of the opening (25).

11. A suspension arrangement according to any one of claims 1 to 10, **characterised in that** the abutment plinth (10, 10a, 10b) is mounted so as to be secured against turning.

12. A suspension arrangement according to any one of claims 1 to 11, **characterised in that** at least one of the spring pads (4, 6) has a grid structure in certain zones on its side (13) remote from the support spring (1).

13. A suspension arrangement according to any one of claims 1 to 12, **characterised in that** the side (13) of at least one of the spring pads (4, 6) remote from the support spring (1) and that of the support ring (11, 12) are situated in one plane.

14. A suspension arrangement according to any one of claims 1 to 13, **characterised in that** the support spring (1) has a turn diameter (D1) reducing at the end.

15. A suspension arrangement according to any one of claims 1 to 14, **characterised in that** the support spring (1) has a consistent wire diameter (D) over its length.

## Revendications

1. Disposition de ressort comportant un ressort porteur (1), configuré en ressort de compression à boudin, dont les extrémités (2, 3) s'appuient indirectement, par l'intermédiaire de semelles de ressort (4, 6) en forme de disque, d'une part sur une carrosserie (5) et, d'autre part, sur un élément de guidage de roue (7) d'un véhicule à moteur, un ressort supplémentaire (9), tenu dans un logement (8, 8a, 8b) et disposé coaxialement au ressort porteur (1), étant affecté à une extrémité (2) du ressort porteur (1), ressort supplémentaire qui peut venir se plaquer contre une face de butée (23) d'un socle de butée (10, 10a, 10b) affecté à la deuxième extrémité (3) du ressort porteur (1), **caractérisée en ce que** le logement (8, 8a, 8b) et le socle de butée (10, 10a, 10b) possèdent une bague de soutien (11, 12) s'étendant radialement vers l'extérieur, qui saisit à l'arrière, au moins en partie, la semelle de ressort (4, 6) correspondante sur son côté (13) opposé au ressort porteur (1), le socle de butée (10, 10a, 10b) présentant une face de butée (23) tournée vers le ressort supplémentaire (9) et dont la normale à la surface (FN) est différente de l'axe longitudinal central (MLA) du ressort porteur (1) de sorte que la normale à la surface (FN) coïncide sensiblement avec l'axe longitudinal central (MLA) du ressort porteur (1) lors de la compression en biais de la disposition de ressort à l'impact du ressort supplémentaire (9) sur le socle de butée (10, 10a, 10b).

2. Disposition de ressort selon la revendication 1, **caractérisée en ce que** l'une des semelles de ressort (4) possède une collerette (16) plaqué radialement à l'extérieur contre le logement (8, 8a, 8b) et regardant le ressort porteur (1), collerette qui oriente, conjointement au logement (8, 8a, 8b) la position d'une extrémité (2) du ressort porteur (1) dans le sens radial.

3. Disposition de ressort selon la revendication 1 ou 2, **caractérisée en ce que** l'une des semelles de ressort (6) possède une collerette (18) plaquée) radialement à l'extérieur contre le socle de butée (10, 10a, 10b et regardant le ressort porteur (1), collerette qui oriente, conjointement au socle de butée (10, 10a, 10b), la position de l'autre extrémité (3) du ressort porteur (1) dans le sens radial.

4. Disposition de ressort selon l'une quelconque des revendications 2 ou 3, **caractérisée en ce que** la collerette (16, 18) présente une contre-dépouille radiale dirigée vers l'intérieur, dans laquelle une spire (17) terminale du ressort porteur (1) entre en prise.

5. Disposition de ressort selon l'une quelconque des revendications 2 à 4, **caractérisée en ce que** le logement (8) et/ou le socle de butée (10, 10a, 10b) possède une empreinte dans la région de la collerette (16, 18) à sa périphérie extérieure.

6. Disposition de ressort selon l'une quelconque des revendications 1 à 5, **caractérisée en ce que** la face de butée (23) a une courbure concave.

7. Disposition de ressort selon l'une quelconque des revendications 1 à 6, **caractérisée en ce que** le logement (8, 8b) et/ou le socle de butée (10, 10b) sont en matière plastique.

8. Disposition de ressort selon l'une quelconque des revendications 1 à 7, **caractérisée en ce que** le socle de butée (10, 10a, 10b) présente un tenon de fixation (24, 39) entrant en prise dans une ouverture (25) de la carrosserie (5) ou de l'élément de guidage des roues (7).

9. Disposition de ressort selon la revendication 8, **caractérisée en ce que** le tenon de fixation (39) présente au moins une entretoise de serrage (37) sur sa périphérie extérieure (38).

10. Disposition de ressort selon la revendication 8 ou 9, **caractérisée en ce que** le tenon de fixation (24) possède plusieurs crochets de serrage (33) élastiques ayant un nez (34) dirigé radialement vers l'extérieur, qui saisissent les arêtes (35) de l'ouverture (25) à l'arrière.

11. Disposition de ressort selon l'une quelconque des revendications 1 à 10, **caractérisée en ce que** le socle de butée (10, 10a, 10b) est logé de façon à ne pas se déformer en torsion.

12. Disposition de ressort selon l'une quelconque des revendications 1 à 11, **caractérisée en ce qu'**au moins une des semelles de ressort (4, 6) présente une structure en réseau sur certaines zones de son côté (13) opposé au ressort porteur (1).

13. Disposition de ressort selon l'une quelconque des revendications 1 à 12, **caractérisée en ce que** le côté (13) opposé au ressort porteur (1) d'au moins une des semelles de ressort (4, 6) et celui de la bague de soutien (11, 12) sont dans un même plan.

14. Disposition de ressort selon l'une quelconque des revendications 1 à 13, **caractérisée en ce que** le ressort porteur (1) possède un diamètre de spire (D1) qui se rétrécit aux extrémités.

15. Disposition de ressort selon l'une quelconque des revendications 1 à 14, **caractérisée en ce que** le ressort porteur (1) possède un diamètre de fil (D) non constant sur sa longueur.
